# EUROPÄISCHE PATENTSCHRIFT

(11) **EP 1 448 691 B1**
(45) Veröffentlichungstag und Bekanntmachung des Hinweises auf die Patenterteilung: **16.11.2005**
(21) Anmeldenummer: 02801885.1
(22) Anmeldetag: 10.10.2002
(51) Int. Cl.: C08K 5/00, C08L 77/00

(54) **VERFAHREN ZUR HERSTELLUNG VON POLYKONDENSATEN**
METHOD FOR THE PRODUCTION OF POLYCONDENSATES
PROCEDE DE PRODUCTION DE POLYCONDENSATS

(30) Priorität: 20.10.2001 DE 10152229
(43) Veröffentlichungstag der Anmeldung: 25.08.2004
(73) Patentinhaber: Clariant GmbH, 65929 Frankfurt am Main (DE)
(72) Erfinder: RICHTER, Eric, 86672 Thierhaupten (DE); LECHNER, Christian, 86857 Hurlach (DE); BOTT, Rainer, 25337 Seeth-Ekholt (DE)
(74) Vertreter: Paczkowski, Marcus
(86) Internationale Anmeldenummer: PCT/EP2002/011332
(87) Internationale Veröffentlichungsnummer: WO 2003/035732

(56) Entgegenhaltungen:
- EP-A- 0 360 611
- EP-A- 0 940 444
- EP-A- 1 164 162
- DE-A- 4 117 308
- DE-A- 10 015 593
- US-A- 5 332 777
- US-A- 5 576 409
- US-A- 5 936 018
- US-A1- 2001 031 809
- DATABASE CA [Online] CHEMICAL ABSTRACTS SERVICE, COLUMBUS, OHIO, US; ASAHI CHEMICAL INDUSTRY CO., LTD., JAPAN: "Polyamide compositions with good moldability" retrieved from STN Database accession no. 99:141032 XP002229931 & JP 58 034851 A (ASAHI CHEMICAL INDUSTRY CO., LTD., JAPAN) 1. März 1983 (1983-03-01)
- DATABASE CA [Online] CHEMICAL ABSTRACTS SERVICE, COLUMBUS, OHIO, US; NAKAJIMA, SHIRO ET AL: "Polyamide compositions for molded products" retrieved from STN Database accession no. 117:28138 XP002229932 & JP 04 065464 A (ASAHI KASEI KOGYO K. K., JAPAN) 2. März 1992 (1992-03-02)
- DATABASE CA [Online] CHEMICAL ABSTRACTS SERVICE, COLUMBUS, OHIO, US; TAKEDA, AKIHIKO ET AL: "Pigment dispersions, coloring compositions containing them and their use in color filter preparation" retrieved from STN Database accession no. 137:86047 XP002229933 & JP 2002 194244 A (FUJI PHOTO FILM CO., LTD., JAPAN) 10. Juli 2002 (2002-07-10)
- DATABASE CA [Online] CHEMICAL ABSTRACTS SERVICE, COLUMBUS, OHIO, US; NAGAE, YOSHITAKA ET AL: "Light-resistant polyamide fibers for clothings with good dyeing color yield and yellowing resistance spun from polyamide compositions containing N,N'-bis(2,2,6,6-tetramethyl-4- piperidyl)isophthalamide or N,N'-bis(2,2,6,6-tetramethyl-4- piperidyl)terephthalamide" retrieved from STN Database accession no. 133:194552 XP002229934 & JP 2000 239924 A (UNITIKA LTD., JAPAN) 5. September 2000 (2000-09-05)
- DATABASE CA [Online] CHEMICAL ABSTRACTS SERVICE, COLUMBUS, OHIO, US; KAWASUMI, TOSHIMITSU: "Water-thinned ink compositions for ball-point pens" retrieved from STN Database accession no. 121:111682 XP002229935 & JP 06 100833 A (SAKURA COLOR PROD CORP, JAPAN) 12. April 1994 (1994-04-12)

## Beschreibung

Die Erfindung betrifft ein Verfahren zur Herstellung von Polykondensaten. Die Verarbeitung von Kunststoffen erfolgt üblicherweise in der Schmelze. Hiermit gehen Struktur- und Zustandsänderungen (z.B. Vernetzungen, Oxidation, Molekulargewichtsänderungen) einher, die kaum ein Kunststoff übersteht, ohne sich in seiner chemischen, physikalischen und technischen Eigenschaften zu verändern. Um die Belastung der Kunststoffe während der Verarbeitung zu reduzieren, setzt man unterschiedliche Additive, wie Stabilisatoren, Gleitmittel, Antioxidantien, Trennmittel, Dispergierhilfsmittel und andere ein.

Bekannt ist der alleinige Einsatz von unterschiedlichen Wachsen als Entformungs- und Trennmittel in Kunststoffen in verschiedenen Kunststoffen, insbesondere in Polyamiden. Häufig werden Metallstearate, Amidwachse und Montanwachsester als Trenn- und Entformungsmittel eingesetzt.

Die Metallstearate verbessern zwar die Fließfähigkeit der Schmelze, führen aber auch häufig zu einem nicht unerheblichen Molekulargewichtsabbau der Polymeren. Montanwachsester und deren Salze verbessern die Fließfähigkeit von Kunststoffen wie Polyamiden allein durch innere Gleitwirkung, ohne das Molekulargewicht des Polymeren zu reduzieren.

Durch die hohen Verarbeitungstemperaturen sowie die chemische Aggressivität der Schmelze gegenüber Farbmitteln ist die Einfärbung von speziell Polyamid besonders schwierig und die Auswahl in Frage kommender Farbmittel (Pigmente) und Dispergiermittel ist stark eingeschränkt. Durch die zusätzliche hohe Scherenergie bei der Dispergierung werden viele Pigmente nachhaltig geschädigt. Auch die Dispergierhilfsmittel müssen optimiert werden.

Als Dispergierhilfsmittel für Pigmente werden bereits Montanwachse bzw. Amidwachse eingesetzt.

Grundsätzlich können Kunststoffe auch nachträglich stabilisiert werden, allerdings wird oft keine ausreichende Homogenisierung erreicht, besonders wenn dem Kunststoffgranulat ein pulverförmiger Stabilisator zugegeben wird.

Für die Stabilisierung von vielen Kunststoffen, insbesondere Polyamiden, gegenüber Luft, Licht und Wärme, haben sich u.a. Kupfersalze, aromatische Amine und sterisch gehinderte Phenole bewährt.

Die vorgenannten (Hilfs-)Mittel können in den verschiedensten Verfahrensschritten, etwa am Ende der Polykondensation oder in einem folgenden Compoundierprozess in den Kunststoff eingebracht werden. Auch besteht die Möglichkeit, pulverförmige Wachse auf das (warme) Kunststoffgranulat aufzutrommeln.

Nach dem bisher bekannten Stand der Technik sind die Wirkungen der verschiedenen aufgeführten (Hilfs-)Mittel in Bezug auf eine Reihe von Eigenschaften, wie beispielsweise innere und äußere Gleitwirkung sowie Dispergierung von Pigmenten und Füllstoffen und Glanz des Kunststoffes, beim Verfahren zur Herstellung von Kunststoffen, insbesondere Polykondensaten, noch nicht ausreichend.

Es war daher Aufgabe der vorliegenden Erfindung, beim Verfahren zur Herstellung von Kunststoffen, insbesondere Polykondensaten solche (Hilfs-)Mittel zur Verfügung zu stellen, die eine insgesamt verbesserte Wirkung auf den Kunststoff, insbesondere bei Polyamiden, ausüben.

Gelöst wird diese Aufgabe durch ein Verfahren der eingangs genannten Art, dadurch gekennzeichnet, dass bei der Herstellung des Polykondensats Wachse und Polymeradditive als Gleit- und Trennmittel und als Dispergiermittel eingesetzt werden.

Überraschenderweise wurde gefunden, dass beim Verfahren zur Herstellung von Polykondensaten Wachsen und Polymeradditive durch synergistische Effekte insbesondere in Polyamiden die besten Ergebnisse in Bezug auf innere, äußere Gleitwirkung sowie Dispergierung von Pigmenten und Füllstoffen und Glanz, verglichen zur Verwendung der Einzelsubstanzen sowie einer Reihe weiterer Wachse, liefert.

Bevorzugt handelt es sich bei dem Wachs um ein Esterwachs und/oder ein Salz einer Carbonsäure.

Bevorzugt handelt es sich bei dem Wachs um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-dimontanwachs-säureester, Montanwachssäuren und Ethylenglykol.

Bevorzugt handelt es sich bei dem Wachs um Umsetzungsprodukte von Montanwachssäuren mit einem Calciumsalz.

Besonders bevorzugt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz.

Bevorzugt handelt es sich bei dem Polymeradditiv um ein Derivat eines aromatischen Di- oder Tri-carboxyl(ester)amids.

Bevorzugt handelt es sich bei dem Derivat um N,N'-bis-pyperidyl-1,3-benzoldicarboxamid.

Bevorzugt handelt es sich bei dem Derivat um N,N'-bis(2,2,6,6-tetramethyl-4-piperidyl)-1,3-benzoldicarboxyamid.

Bevorzugt wird beim erfindungsgemäßen Verfahren Wachs und Polymeradditiv im Gewichtsverhältnis 1:9 bis 9:1 eingesetzt.

Bevorzugt wird beim erfindungsgemäßen Verfahren Wachs und Polymeradditiv im Gewichtsverhältnis 3:7 bis 7:3 eingesetzt.

Bevorzugt wird beim erfindungsgemäßen Verfahren Wachs und Polymeradditiv im Gewichtsverhältnis 4,5:5,5 bis 5,5:4,5 eingesetzt.

Bevorzugt handelt es sich bei dem Polykondensat um Polyamid.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt werden Wachs und Polymeradditiv als Granulat, Schuppen, Feinkorn, Pulver und/oder Micronisat eingesetzt.

Bevorzugt werden Wachs und Polymeradditiv an gleichen oder unterschiedlichen Prozessschritten bei der Herstellung/Verarbeitung von Polyamiden eingebracht.

Bevorzugt erfolgt die Einarbeitung von Wachs und Polymeradditiv in der Polykondensation, in der Compoundierung oder direkt bei der formgebenden Verarbeitung.

Bevorzugt werden Wachs und Polymeradditiv einzeln, als physikalische Mischung der Feststoffe, als Schmelzmischung, als Kompaktat oder in Form eines Masterbatches eingesetzt werden.

Bevorzugt werden Wachs und Polymeradditiv in einer Gesamtmenge von 0,01 bis 10,00 Gew.%, bezogen auf das Polyamid, eingesetzt.

Besonders bevorzugt Wachs und Polymeradditiv in einer Gesamtmenge von 0,1 bis 2,00 Gew.%, bezogen auf das Polyamid, eingesetzt.

Geeignete Gleitmittel für das erfindungsgemäße Verfahren sind Montanwachse, die sich als eine Mischung einer langkettigen linearen gesättigten Carbonsäure mit 24 bis 36 Kohlenstoffatomen mit unterschiedlichen Estern dieser Carbonsäure mit verschiedenen Alkoholen und den Salzen der Carbonsäuren beschreiben lassen. Sie enthalten oft natives Montanwachs, d.h. den Ester einer langkettigen Carbonsäure mit einem langkettigen monofunktionellen Alkohol.

Weiterhin werden Ester der Montanwachssäure mit Glykol, Glycerin, Butandiol (1,3- und 1,4-), Trimethylolpropan, Pentaerythrit und Dipentaerythrit und deren teilverseiften Produkte eingesetzt. Diese Produkte können in ihrer Verseifungszahl, ihrer Säurezahl und gegebenenfalls ihrem Metallanteil variiert werden.

Bei den Montanwachsen, die bevorzugt für das erfindungsgemäße Verfahren eingesetzt werden können, handelt es sich um Umsetzungsprodukte von Montanwachssäure bzw. einer Mischung von nativen Montanwachsestern und Montanwachssäuren mit Ethylenglycol zu einer Mischung des Mono- und Diesters und der Edukte (z.B. ®Licowax E, Clariant GmbH). Besonders geeignet ist auch ist das Calciumsalz der Montanwachssäuren. Dieses Produkt ist ein Umsetzungsprodukt der Montanwachssäure bzw. einer Mischung von nativen Montanwachsestern und Montanwachssäuren mit einem Calciumsalz zu einer Mischung aus Calciummontanat und den Edukten (z.B. ®Licomont CaV 102, Clariant GmbH).

Bei den Polymeradditiven, die bevorzugt für das erfindungsgemäße Verfahren eingesetzt werden können, handelt es sich um Verbindungen des Typs der aromatischen Di- oder Tri-carboxylester bzw. -amide. Insbesondere hat sich herausgestellt, dass substituierte Substanzen des Typs N,N'-bis pyperidyl-1,3-benzodicarboxamid geeignet sind, beispielsweise das N,N'-bis(2,2,6,6-tetramethyl-4-piperidyl)-1,3-benzodicarboxamid (Nylostab® S-EED, Clariant GmbH).

Werden beim erfindungsgemäßen Verfahren von Polykondensaten (Polyamiden) Wachse und Polymeradditive eingesetzt, so werden die innere und äußere Gleitwirkung erhöht und die Fließfähigkeit verbessert. Ebenso resultiert eine sehr starke Trennwirkung und die Klebeneigung der Polyamid-Formmasse an heißen Maschinenteilen wird deutlich reduziert.

Weiterhin werden die optischen Eigenschaften eine Polyamid-Formteils (Oberflächenglanz) durch den Einsatz von Wachs und Polymeradditiv nach der vorliegenden Erfindung deutlich verbessert.

Beim erfindungsgemäßen Verfahren zur Herstellung von Polykondensaten in Pigmentmasterbatchen mit Polyamid als Trägermaterial führt der Einsatz von Wachs und Polymeradditiv zur Verbesserung der Eigenschaften, insbesondere einer feineren und gleichmäßigeren Verteilung von Pigmenten und Füllstoffen, erfassbar durch deutlich niedrigeren Filterdruckwert sowie durch eine erhöhte Farbstärke.

Beim erfindungsgemäßen Verfahren zur Herstellung von Polykondensaten erfolgt die Einarbeitung von pulverförmigen bzw. feinkomartigen Substanzen durch Einmischen bzw. Aufziehen derselben auf das kalte oder warme Trägerpolymer und anschließende Verarbeitung durch einen formgebenden Verarbeitungsschritt (z.B. Spritzguss, Flachfolienherstellung, Kalandrieren) bzw. durch vorheriges Eincompoundieren mittels eines Extruders, wobei Wachs bzw. Polymeradditiv mittels Seitendosierung dosiert oder zuvor in das Polyamid eingemischt werden können.

### Beispiele

Die Trennwirkung (äußere Gleitwirkung) von Gleitmitteln in technischen Kunststoffen wie Polyamid wird durch Entformungskraftmessung beim Spritzgießen quantifiziert. Dazu wird eine zylindrische Hülse im Spritzgießverfahren hergestellt und die benötigte Maximalkraft zum Entformen der Hülse aus dem Werkzeug als Entformungskraft registriert. Je niedriger die Entformungskraft, desto besser ist die äußere Gleitwirkung des eingesetzten Gleitmittels.

Für die Untersuchungen wurde eine spezielles Polyamid 6 verwendet, welches keinerlei Gleitmittel enthält und daher ohne den nachträglichen Zusatz von Gleitmitteln nicht zu verarbeiten ist. Die Entformungskraft liegt > 10000 N. Die Gleitmittel und Additive wurden in das Polymergranulat eingemischt, mittels eines Doppelschneckenextruders eincompoundiert und anschließend nach Vortrocknung mittels Spritzguss verarbeitet.

Sämtliche Versuche wurden aufgrund der Vergleichbarkeit unter identischen Bedingungen (Temperaturprogramme, Schneckengeometrien, Spritzgießparameter etc.) durchgeführt.

### Beispiel 1 (Trennwirkung (äußere Gleitwirkung))

### Polyamid 6, unverstärkt

| | |
|---|---|
| 0,15 phr Nylostab S-EED* + 0,15 phr Calciummontanat Vergleich: | 400 N |
| | |
| Polyamid 6 ohne Gleitmittel | >10000N |
| 0,3 phr Nylostab S-EED* | 1500 N |
| 0,3 phr Calciummontanat | 550 N |
| 0,3 phr Montanwachsester | 550 N |

| | |
|---|---|
| (* Nylostab S-EED entspricht N,N'-bis(2,2,6,6-tetramethyl-4-piperidyl)-1,3-benzoldicarboxamid) | |

### Polyamid 6, glasfaserverstärkt

| | |
|---|---|
| 0,15 phr Nylostab S-EED + 0,15 phr Calciummontanat | 850 N |
| 0,15 phr Nylostab S-EED + 0,15 phr Montanwachsester Vergleich: | 800 N |
| | |
| Polyamid 6 (30 % Glasfaser) ohne Gleitmittel | 2500 N |
| 0,3 phr Calciummontanat | 1000 N |
| 0,3 phr Montanwachsester | 900 N |

Die Fließverbesserung (innere Gleitwirkung) von Gleitmitteln in technischen Kunststoffen wie Polyamid wird durch die Bestimmung der Fließlänge mittels des sog. "Spiraltest" quantifiziert. Dazu wird eine skalierte Spirale im Spritzgießverfahren hergestellt und die Länge bestimmt. Je länger der Fließweg (d.h. die Spirale), desto besser ist die innere Gleitwirkung, d.h. die Fließfähigkeit des Polymers.

Es wurde gearbeitet wie in Beispiel 1 und das spezielle Polyamid aus Beispiel 1 verwendet.

### Beispiel 2 (Fließverbesserung von Polyamid (innere Gleitwirkung))

| | |
|---|---|
| 0,15 phr Nylostab S-EED + 0,15 phr Calciummontanat Vergleich: | 42,0 cm |
| | |
| 0,3 phr Nylostab S-EED | 40,5 cm |
| 0,3 phr Calciummontanat | 41,0 cm |

Diese Fließverbesserung konnte von keinem aus dem Stand der Technik bekannten Gleitmittel erreicht werden.

Die Glanzmessung erfolgt durch Bestimmung mit einem Reflektometer bei dem das reflektierte Licht unter einem bestimmten Einfallswinkel (Glanzwinkel) gemessen wird. Gemäß DIN 67530 sollen Oberflächen, die unter einem 60° Glanzwinkel Werte über 70 Einheiten zeigen unter einem Glanzwinkel von 20° gemessen werden. Die folgenden Werte ergaben sich bei Messung unter einem Glanzwinkel von 20°: Die Herstellung der Spritzplatten zur Glanzmessung erfolgte aufgrund der Vergleichbarkeit unter konstanten Bedingungen.

### Beispiel 3 Glanz von Polyamidcompounds

| | |
|---|---|
| 0,15 phr Nylostab S-EED/0,15 phr Calciummontanat Vergleich: | 89 Glanzeinheiten |
| | |
| Polyamid 6 ohne Gleitmittel | 87 Glanzeinheiten |
| 0,3 phr Nylostab S-EED | 65 Glanzeinheiten |
| 0,3 phr Calciummontanat | 70 Glanzeinheiten |

Speziell bei Masterbatchen mit technischen Kunststoffen wie Polyamid, werden Montanwachse als Dispergierhilfsmittel zur Benetzung der Pigmente eingesetzt, um die zur Agglomeration neigenden und schwer dispergierbaren Pigmente zu zerteilen. Quantifiziert wird dies durch den sogenannten Filterdrucktest, bei dem der Druckaufbau vor einem Filter bestimmter Maschenweite gemessen wird, welcher sich verstärkt aufbaut, je größer die Agglomerate sind, und somit den Filter zusetzten. Je besser dispergiert die Pigmente sind, desto besser können sie den Filter passieren und desto besser ist die Dispergierung. Somit ist ein kleiner Filterdruckwert gemessen in [bar/g Pigment] ein Maß für gute Dispergierwirkung der Gleitmittel.

Als Pigment wurde PV Echtrosa ausgewählt, da es in Polyamid schwer dispergierbar ist. Als Träger wurde ein additivfreies Polyamid 6 verwendet, um die alleinige Wirkung der zugesetzten Additive untersuchen zu können. Dabei wurde überraschend festgestellt, dass die erfindungsgemäße Kombinationen aus Wachs (Montanwachsen wie Montanwachsester oder Calciummontanat) mit einem Polymeradditiv (®Nylostab S-EED) extrem gute Dispergierung, d.h. niedrige Filterdruckwerte liefert, welche durch keine andere Kombination erreicht werden konnte.

Die Pigmente und Additive wurden mittels Kaltmischung eingemischt und an einem Doppelschneckenextruder eincompoundiert. Anschließend erfolgte die Ermittlung des Druckfilterwertes über ein 14 µm Filter.

### Beispiel 4 Dispergierung von Pigmenten in Polyamiden

| | | | | | | | | |
|---|---|---|---|---|---|---|---|---|
| Polyamid 6 unverstärkt | 60 % | 60 % | 60 % | 65 % | 65 % | 65 % | 65 % | 65 % |
| PV Echtrosa E | 30 % | 30 % | 30 % | 30 % | 30 % | 30 % | 30 % | 30 % |
| Nylostab S-EED | 5 % | 5 % | | | | | | |
| Calciummontanat | 5 % | | 10 % | | | | | |
| Montanwachsester | | 5 % | | 5 % | | | | |
| Licowax OP | | | | | 5 % | | | |
| Licolub WE 40 | | | | | | 5 % | | |
| Licolub WE 4 | | | | | | | 5 % | |
| Ceridust® 5551 | | | | | | | | 5 % |
| Filterdruckwert | 4,0 | 3,6 | 18,0 | 6,0 | 11,4 | 13,4 | 12,0 | 16,6 |
| [bar/g Pigment] | | | | | | | | |

## Patentansprüche

1. Verfahren zur Herstellung von Polykondensaten, **dadurch gekennzeichnet, dass** bei der Herstellung des Polykondensats Wachse und Polymeradditive als Gleit- und Trennmittel und als Dispergiermittel eingesetzt werden, wobei es sich beim Wachs um Umsetzungsprodukte von Montanwachssäuren mit Ethylenglykol oder um Umsetzungsprodukte von Montanwachssäuren mit einem Calciumsalz handelt und es sich bei dem Polymeradditiv um ein Derivat eines aromatischen Di- oder Tri-carboxyl(ester)amids handelt.

2. Verfahren nach Anspruch 1, **dadurch gekennzeichnet, dass** es sich bei den Umsetzungsprodukten um eine Mischung aus Ethylenglykol-Mono-Montanwachssäureester, Ethylenglykol-dimontanwachs-säureester, Montanwachssäuren und Ethylenglykol handelt.

3. Verfahren nach Anspruch 1, **dadurch gekennzeichnet, dass** es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz handelt.

4. Verfahren nach einem oder mehreren der Ansprüche 1 bis 3, **dadurch gekennzeichnet, dass** es sich bei dem Derivat um N,N'-bis-pyperidyl-1,3-benzoldicarboxamid und/oder um N,N'-bis(2,2,6,6-tetramethyl-4-piperidyl)1,3-benzoldicarboxyamid handelt.

5. Verfahren nach einem oder mehreren der Ansprüche 1 bis 4, **dadurch gekennzeichnet, dass** Wachs und Polymeradditiv im Gewichtsverhältnis 1:9 bis 9:1 eingesetzt werden.

6. Verfahren nach einem oder mehreren der Ansprüche 1 bis 5, **dadurch gekennzeichnet, dass** das Gewichtsverhältnis 3:7 bis 7:3 beträgt.

7. Verfahren nach einem oder mehreren der Ansprüche 1 bis 6, **dadurch gekennzeichnet, dass** das Gewichtsverhältnis 4,5:5,5 bis 5,5:4,5 beträgt.

8. Verfahren nach einem oder mehreren der Ansprüche 1 bis 7, **dadurch gekennzeichnet, dass** es sich bei dem Polykondensat um Polyamide handelt.

9. Verfahren nach einem oder mehreren der Ansprüche 1 bis 8, **dadurch gekennzeichnet, dass** es sich bei den Polyamiden um solche vom Aminosäure-Typ und/oder vom Diamin-Dicarbonsäure-Typ handelt.

10. Verfahren nach einem oder mehreren der Ansprüche 1 bis 9, **dadurch gekennzeichnet, dass** es sich bei den Polyamiden um Polyamid 6 und/oder Polyamid 66 handelt.

11. Verfahren nach einem oder mehreren der Ansprüche 1 bis 10, **dadurch gekennzeichnet, dass** die Polyamide unverändert, gefärbt, gefüllt, ungefüllt, verstärkt, unverstärkt oder auch anders modifiziert sind.

12. Verfahren nach einem oder mehreren der Ansprüche 1 bis 11, **dadurch gekennzeichnet, dass** Wachs und Polymecadditiv als Granulat, Schuppen, Feinkorn, Pulver und/oder Micronisat eingesetzt werden.

13. Verfahren nach einem oder mehreren der Ansprüche 1 bis 11, **dadurch gekennzeichnet, dass** Wachs und Polymeradditiv an gleichen oder unterschiedlichen Prozessschritten bei der Herstellung/Verarbeitung von Polyamiden eingebracht werden.

14. Verfahren nach einem oder mehreren der Ansprüche 1 bis 13, **dadurch gekennzeichnet, dass** die Einarbeitung von Wachs und Polymeradditiv in der Polylcondensation, in der Compoundierung oder direkt bei der formgebenden Verarbeitung erfolgt.

15. Verfahren nach einem oder mehreren der Ansprüche 1 bis 14, **dadurch gekennzeichnet, dass** Wachs und Polymeradditiv einzeln, als physikalische Mischung der Feststoffe, als Schmelzmischung, als Kompaktat oder in Form eines Masterbatches eingesetzt werden.

16. Verfahren nach einem oder mehreren der Ansprüche 1 bis 15, **dadurch gekennzeichnet, dass**. Wachs und Polymeradditiv in einer Menge von 0,01 bis 10,00 Gew.-%, bezogen auf das Polyamid, eingesetzt werden.

17. Verfahren nach einem oder mehreren der Ansprüche 1 bis 16, **dadurch gekennzeichnet, dass** Wachs und Polymeradditiv in einer Menge von 0,1 bis 2,00 Gew.% eingesetzt werden.

## Claims

1. A process for preparing polycondensates, which comprises using waxes and polymer additives as lubricants and release agents, and as dispersing agents, during the preparation of the polycondensate, where the wax is products of the reaction of montan wax acids with ethylene glycol, or products of the reaction of montan wax acids with a calcium salt, and the polymer additive is a derivative of an aromatic di- or tricarboxylic (ester) amide.

2. The process as claimed in claim 1, wherein the products of the reaction are a mixture of the mono(montan wax acid) ester of ethylene glycol, the di(montan wax acid) ester of ethylene glycol, montan wax acids, and ethylene glycol.

3. The process as claimed in claim 1, wherein the products of the reaction are a mixture of the mono(montan wax acid) ester of 1,3-butanediol, the di(montan wax acid) ester of 1,3-butanediol, montan wax acids, 1,3-butanediol, calcium montanate, and the calcium salt.

4. The process as claimed in one or more of claims 1 to 3, wherein the derivative is N,N'-bispiperidyl-1,3-benzenedicarboxamide and/or N,N'-bis(2,2,6,6-tetramethyl-4-piperidyl)-1,3-benzenedicarboxamide.

5. The process as claimed in one or more of claims 1 to 4, wherein use is made of wax and polymer additive in a ratio by weight of from 1:9 to 9:1.

6. The process as claimed in one or more of claims 1 to 5, wherein the ratio by weight is from 3:7 to 7:3.

7. The process as claimed in one or more of claims 1 to 6, wherein, the ratio by weight is from 4.5:5.5 to 5.5:4.5.

8. The process as claimed in one or more of claims 1 to 7, wherein the polycondensate is polyamides.

9. The process as claimed in one or more of claims 1 to 8, wherein the polyamides are those of amino-acid type and/or those of diamine-dicarboxylic-acid type.

10. The process as claimed in one or more of claims 1 to 9, wherein the polyamides are nylon-6 and/or nylon-6,6.

11. The process as claimed in one or more of claims 1 to 10, wherein the polyamides are unmodified, colored, filled, unfilled, reinforced, or unreinforced polyamides, or else polyamides which have been otherwise modified.

12. The process as claimed in one or more of claims 1 to 11, wherein use is made of wax and polymer additive in the form of pellets, flakes, fine grains, powder, and/or micronizate.

13. The process as claimed in one or more of claims 1 to 11, wherein wax and polymer additive are introduced in the same or different steps of the process during the preparation/processing of polyamides.

14. The process as claimed in one or more of claims 1 to 13, wherein wax and polymer additive are introduced during the polycondensation, during the compounding process, or directly during the shaping process.

15. The process as claimed in one or more of claims 1 to 14, wherein use is made of wax and polymer additive individually, in the form of a physical mixture of the solids, in the form of a melt mixture, in the form of a compactate, or in the form of a masterbatch.

16. The process as claimed in one or more of claims 1 to 15, wherein the amount used of wax and polymer additive is from 0.01 to 10.00% by weight, based on the polyamide.

17. The process as claimed in one or more of claims 1 to 16, wherein the amount used of wax and polymer additive is from 0.1 to 2.00% by weight.

## Revendications

1. Procédé de fabrication de polycondensats, **caractérisé en ce que** l'on utilise dans la fabrication du polycondensat des cires et des additifs de polymères comme agents lubrifiants et agents de démoulage et comme agents dispersants, dans lequel il s'agit pour la cire de produits de réaction d'acides montaniques avec l'éthylèneglycol ou de produits de réaction d'acides montaniques avec un sel de calcium et **en ce qu'**il s'agit pour l'additif de polymère d'un dérivé d'un di- ou tri-carboxyl(ester)amide aromatique.

2. Procédé selon la revendication 1, **caractérisé en ce qu'**il s'agit pour les produits de réaction d'un mélange d'ester d'acide mono-montanique et d'éthylène-glycol, d'ester d'acide di-montanique et d'éthylène-glycol, d'acides montaniques et d'éthylèneglycol.

3. Procédé selon la revendication 1, **caractérisé en ce qu'**il s'agit pour les produits de réaction d'un mélange d'ester d'acide mono-montanique et de 1,3-butanediol, d'ester d'acide di-montanique et de 1,3-butanediol, d'acides montaniques, de 1,3-butanediol, de montanate de calcium et du sel de calcium.

4. Procédé selon une ou plusieurs des revendications 1 à 3, **caractérisé en ce qu'**il s'agit pour le dérivé du N,N'-bis-pipéridyl-1,3-benzène-dicarboxamide et/ou du N,N'-bis(2,2,6,6-tétraméthyl-4-pipéridyl)-1,3-benzènedicarboxamide.

5. Procédé selon une ou plusieurs des revendications 1 à 4, **caractérisé en ce que** l'on utilise la cire et l'additif de polymère dans le rapport en poids de 1:9 à 9:1.

6. Procédé selon une ou plusieurs des revendications 1 à 5, **caractérisé en ce que** le rapport en poids est de 3:7 à 7:3.

7. Procédé selon une ou plusieurs des revendications 1 à 6, **caractérisé en ce que** le rapport en poids est de 4,5:5,5 à 5,5:4,5.

8. Procédé selon une ou plusieurs des revendications 1 à 7, **caractérisé en ce qu'**il s'agit pour le polycondensat de polyamides.

9. Procédé selon une ou plusieurs des revendications 1 à 8, **caractérisé en ce qu'**il s'agit pour les polyamides de ceux du type aminoacide et/ou du type acide diaminedicarboxylique.

10. Procédé selon une ou plusieurs des revendications 1 à 9, **caractérisé en ce qu'**il s'agit pour les polyamides de polyamide 6 et/ou polyamide 66.

11. Procédé selon une ou plusieurs des revendications 1 à 10, **caractérisé en ce que** les polyamides sont non modifiés, teintés, chargés, non chargés, renforcés, non renforcés ou encore modifiés autrement.

12. Procédé selon une ou plusieurs des revendications 1 à 11, **caractérisé en ce que** l'on utilise la cire et l'additif de polymère sous forme de granulés, paillettes, grains fins, poudres et/ou micronisat.

13. Procédé selon une ou plusieurs des revendications 1 à 11, **caractérisé en ce que** la cire et l'additif de polymère sont mis en oeuvre dans des étapes de procédés identiques ou différents au cours de la fabrication/transformation de polyamides.

14. Procédé selon une ou plusieurs des revendications 1 à 13, **caractérisé en ce que** l'on effectue l'incorporation de cire et d'additif de polymère dans la polycondensation, dans le mélange ou directement dans la transformation de mise en forme.

15. Procédé selon une ou plusieurs des revendications 1 à 14, **caractérisé en ce que** l'on utilise la cire et l'additif de polymère seul, sous forme de mélange physique des matières solides, sous forme de mélange fondu, sous forme de mélange compacté ou sous forme d'un lot maître.

16. Procédé selon une ou plusieurs des revendications 1 à 15, **caractérisé en ce que** l'on utilise la cire et l'additif de polymère en une quantité de 0,01 à 10,00 % en poids par rapport au polyamide.

17. Procédé selon une ou plusieurs des revendications 1 à 16, **caractérisé en ce que** l'on utilise la cire et l'additif de polymère en une quantité de 0,1 à 2,00 % en poids.
